# EUROPÄISCHE PATENTSCHRIFT

(11) **EP 2 133 171 B1**
(45) Veröffentlichungstag und Bekanntmachung des Hinweises auf die Patenterteilung: **08.08.2012**
(21) Anmeldenummer: 08010660.2
(22) Anmeldetag: 12.06.2008
(51) Int. Cl.: B23K 26/38

(54) **Maschinelle Vorrichtung zum Bearbeiten von Werkstücken mittels eines Laserstrahls**
Machine device for processing workpieces using a laser beam
Dispositif mécanique de traitement de pièces à usiner à l'aide d'un rayon laser

(43) Veröffentlichungstag der Anmeldung: 16.12.2009
(73) Patentinhaber: Trumpf Sachsen GmbH, 01904 Neukirch/Lausitz (DE)
(72) Erfinder: Harnisch, Gunter, 01936 Königsbrück (DE); Knobel, Carsten, 02689 Sohland (DE); Harig, Rene, 01159 Dresden (DE)
(74) Vertreter: Kohler Schmid Möbus

(56) Entgegenhaltungen:
- EP-A- 1 716 963
- DE-U1- 9 407 288
- US-A- 4 997 250
- US-A1- 2003 196 993
- US-A1- 2005 150 876
- US-B1- 6 501 043

## Beschreibung

Die Erfindung betrifft eine maschinelle Vorrichtung zum Bearbeiten von Werkstücken, beispielsweise von Blechen, mittels eines Laserstrahls.

Eine gattungsgemäße Vorrichtung
- mit einem Bearbeitungskopf, der eine Fokussieroptik aufweist, von welcher aus der Laserstrahl als Bearbeitungsstrahl auf ein Werkstück richtbar ist und der in Richtung der Achse des Bearbeitungsstrahls ("z-Achse") zustellbar ist,
- mit einem Laserlichtkabel, über welches der Laserstrahl der Fokussieroptik zuführbar ist sowie
- mit einer Kollimationseinrichtung, die eine zwischen dem zu der Fokussieroptik hin liegenden Ende des Laserlichtkabels und der Fokussieroptik angeordnete und von dem Laserstrahl durchsetzbare Kollimationsoptik aufweist und die eine Einrichtungsachse besitzt, die parallel zu der Durchsatzrichtung des Laserstrahls an der Kollimationsoptik verläuft,
wurde in der Vergangenheit von der Firma TRUMPF^{®} Werkzeugmaschinen GmbH + Co. KG, 71254 Ditzingen, Deutschland unter der Bezeichnung "Trumatic^{®} HSL 2502" angeboten. An dieser Vorrichtung wird ein letztlich zum Schneiden von Blechen dienender Laserstrahl mittels eines Festkörperlasers erzeugt und einem Laserschneidkopf über ein Laserlichtkabel zugeführt. In dem Laserschneidkopf ist eine Fokussierlinse untergebracht, von der aus der als Schneidwerkzeug genutzte Laserschneidstrahl auf das jeweils zu bearbeitende Blech gerichtet wird. Zwischen dem zu der Fokussierlinse hin liegenden Ende des Laserlichtkabels einerseits und der Fokussierlinse andererseits ist eine Kollimationslinse vorgesehen, mittels derer der Laserstrahl nach dem Austritt aus dem Laserlichtkabel parallel ausgerichtet wird. Die Kollimationslinse ist im Innern eines Kollimationsgehäuses angeordnet und gemeinsam mit diesem Teil einer Kollimationseinrichtung. Die Kollimationseinrichtung bzw. deren Kollimationsgehäuse ist mit dem Laserschneidkopf starr verbunden. Zur Einstellung eines auf den jeweiligen Anwendungsfall abgestimmten Abstandes zwischen einer Schneiddüse des Laserschneidkopfes und der Oberfläche des zu bearbeitenden Bleches bzw. zur Beibehaltung eines eingestellten Düsenabstandes während des Schneidvorganges werden der Laserschneidkopf und die Kollimationseinrichtung bzw. das Kollimationsgehäuse gemeinschaftlich in Richtung der als z-Achse bezeichneten Achse des Laserschneidstrahls zugestellt. Insbesondere während der Blechbearbeitung sind dabei hochdynamische Bewegungen auszuführen. Die Kollimationseinrichtung besitzt eine Einrichtungsachse, die mit der Längsachse des Kollimationsgehäuses zusammenfällt. Gegenüber dem Laserschneidkopf ist die Kollimationseinrichtung derart ausgerichtet, dass die Einrichtungsachse bzw. die Längsachse des Kollimationsgehäuses in Richtung der z-Achse also in Richtung der Achse des Laserschneidstrahls verläuft. In dieser Richtung ergibt sich folglich eine verhältnismäßig große Bauhöhe der den Laserschneidkopf und die Kollimationseinrichtung bzw. das Kollimationsgehäuse umfassenden Baugruppe.

US 6,501,043 B1, die dem Oberbegriff vom Anspruch 1 zugrundeliegt, offenbart eine maschinelle Vorrichtung zum Bearbeiten von Werkstücken mittels eines Laserstrahls, im Falle derer eine Kollimationseinrichtung mit Kollimationsoptik und ein Bearbeitungskopf mit Fokussieroptik starr miteinander verbunden sind.

Aufgabe der vorliegenden Erfindung ist es, eine maschinelle Vorrichtung bereitzustellen, die ungeachtet einer kompakten Bauweise einer Baugruppe mit Kollimationseinrichtung sowie Bearbeitungskopf funktionssicher arbeitet und eine qualitativ hochwertige Laserstrahlbearbeitung ermöglicht.

Erfindungsgemäß gelöst wird diese Aufgabe durch die maschinelle Vorrichtung gemäß Patentanspruch 1.

Im Falle der Erfindung ist die Kollimationseinrichtung derart ausgerichtet, dass die Einrichtungsachse in Querrichtung der z-Achse, also in Querrichtung der Achse des von dem Bearbeitungskopf auf zu bearbeitende Werkstücke gerichteten Bearbeitungsstrahls verläuft. Infolgedessen ergibt sich in Richtung der z-Achse eine verhältnismäßig kleine Bauhöhe der den Bearbeitungskopf und die Kollimationseinrichtung umfassenden Baugruppe. Aufgrund der erfindungsgemäßen Ausrichtung kann die Kollimationseinrichtung allerdings quer zu der z-Achse vorkragen. Abhängig von der Brennweite der Kollimationsoptik und deren Verstellweg kann die Kollimationseinrichtung eine beträchtliche Baulänge in Richtung der Einrichtungsachse besitzen. Wäre die Kollimationseinrichtung gleichzeitig mit dem Bearbeitungskopf starr verbunden und wäre sie folglich bei Zustellbewegungen des Bearbeitungskopfes in Richtung der z-Achse mitzubewegen, so bestünde insbesondere bei hochdynamischen Zustellbewegungen die Gefahr, dass die quer zu der z-Achse vorkragende Kollimationseinrichtung in Schwingung gerät und dadurch die Funktionsfähigkeit der Laserstrahlführung und letztlich die Qualität der Laserstrahlbearbeitung beeinträchtigt wird. Um derartige Negativerscheinungen zu vermeiden, ist der Bearbeitungskopf der erfindungsgemäßen Vorrichtung bei Zustellbewegungen in Richtung der z-Achse von der Kollimationseinrichtung entkoppelt. Diese Entkopplung, d.h. die Beweglichkeit des Bearbeitungskopfes relativ zu der Kollimationseinrichtung, ermöglicht eine kompakte Bauweise der den Bearbeitungskopf und die Kollimationseinrichtung umfassenden Baugruppe, ohne dass Einschränkungen der Leistungsfähigkeit der maschinellen Vorrichtung in Kauf genommen werden müssten. Besonders vorteilhaft ist die erfindungsgemäße Entkopplung von Bearbeitungskopf und Kollimationseinrichtung bei Zustellbewegungen des Bearbeitungskopfes in Fällen, in denen die Kollimationseinrichtung eine motorische Stelleinrichtung für die Kollimationsoptik aufweist und folglich eine entsprechend große Masse besitzt, die bei starrer Kopplung von Kollimationseinrichtung und Bearbeitungskopf gemeinschaftlich mit dem Bearbeitungskopf zu bewegen wäre.

Besondere Ausführungsarten der Erfindung nach Patentanspruch 1 ergeben sich aus den abhängigen Patentansprüchen 2 bis 8.

Gemäß Patentanspruch 2 ist in bevorzugter Ausgestaltung der Erfindung die Kollimationseinrichtung in Richtung der z-Achse ortsfest. Bewegungen in dieser Richtung werden dementsprechend ausschließlich von dem Bearbeitungskopf ausgeführt.

Durch eine besonders kleine Bauhöhe in Richtung der z-Achse bei gleichzeitig einfacher Laserstrahlführung zwischen der Kollimationsoptik und der Fokussieroptik zeichnet sich die Erfindungsbauart gemäß Patentanspruch 3 aus, im Falle derer die Einrichtungsachse der Kollimationseinrichtung unter einem rechten Winkel gegenüber der z-Achse verläuft. Von einem rechten Winkel abweichende Winkel sind aber auch denkbar.

Die Patentansprüche 4 bis 8 betreffen Maßnahmen, die in Weiterbildung der Erfindung getroffen werden, um ungeachtet der Relativbeweglichkeit von Bearbeitungskopf und Kollimationseinrichtung in Richtung der z-Achse eine störungsfreie, leistungsfähige und qualitativ hochwertige Laserbearbeitung zu gewährleisten.

Gemäß Patentanspruch 4 verläuft der Laserstrahl zwischen der Kollimationsoptik und der Fokussieroptik in einem durch eine Raumwand begrenzten Strahlführungsraum. Die Raumwand des Strahlführungsraums ist entsprechend den von dem Bearbeitungskopf ausgeführten Bewegungen in Richtung der z-Achse längenveränderlich. Im Innern des Strahlführungsraums ist der Laserstrahl gegen schädliche Umgebungseinflüsse geschützt.

Mit einem in Richtung der z-Achse ausziehbaren und stauchbaren Faltenbalg besitzt der Strahlführungsraum der erfindungsgemäßen Vorrichtung nach Patentanspruch 5 eine Raumwand, die sich in der Praxis vielfach bewährt hat.

Im Falle der Erfindungsbauart nach Patentanspruch 6 ist der Strahlführungsraum zwischen der Kollimationsoptik und der Fokussieroptik mit einem gasförmigen Medium gefüllt und im wesentlichen hermetisch abgedichtet. Die Zusammensetzung des gasförmigen Mediums ist auf den in dem Strahlführungsraum verlaufenden Laserstrahl abgestimmt und stellt sicher, dass der Laserstrahl in seinen für den Erfolg der Werkstückbearbeitung maßgebenden Eigenschaften nicht beeinträchtigt wird. Die hermetische Abdichtung des Strahlführungsraumes dient dazu, schädliche Umgebungseinflüsse, insbesondere für die Laserstrahlleistung schädliche Gase von dem Laserstrahl fernzuhalten. Das erfindungsgemäße Gasausgleichsvolumen sorgt dafür, dass der Innendruck des Strahlführungsraumes ungeachtet der von dem Bearbeitungskopf ausgeführten Zustellbewegungen weitestgehend konstant bleibt.

Gemäß Patentanspruch 7 ist in weiterer bevorzugter Ausgestaltung der Erfindung vorgesehen, dass in dem Strahlführungsraum zwischen der Kollimationsoptik und der Fokussieroptik ein Überdruck herrscht. Auch dieses Erfindungsmerkmal dient dazu, das Eindringen schädlicher Substanzen in das Innere des Strahlführungsraumes zu verhindern.

Verschmutzungen, die unerwünschterweise in den Strahlführungsraum zwischen der Kollimationsoptik und der Fokussieroptik gelangt sind, werden im Falle der Erfindungsbauart nach Patentanspruch 8 durch einen im Inneren des Strahlführungsraumes vorgesehenen Schmutzabsorber gebunden und dadurch von dem Laserstrahl ferngehalten. Als Schmutzabsorber gebräuchlich sind beispielsweise Absorberfolien.

Nachstehend wird die Erfindung anhand beispielhafter schematischer Darstellungen näher erläutert. Es zeigen:
- Figur 1: eine Schnittdarstellung einer in einem ersten Betriebszustand befindlichen Baugruppe einer Laserschneidmaschine für die Blechbearbeitung,
- Figur 2: einen schematisierten Teilschnitt der Baugruppe gemäß Figur 1,
- Figur 3: die Baugruppe gemäß den Figuren 1 und 2 in einem zweiten Betriebszustand und
- Figur 4: die Baugruppe gemäß Figur 3 in der Ansicht in Richtung des Pfeils IV in Figur 3.

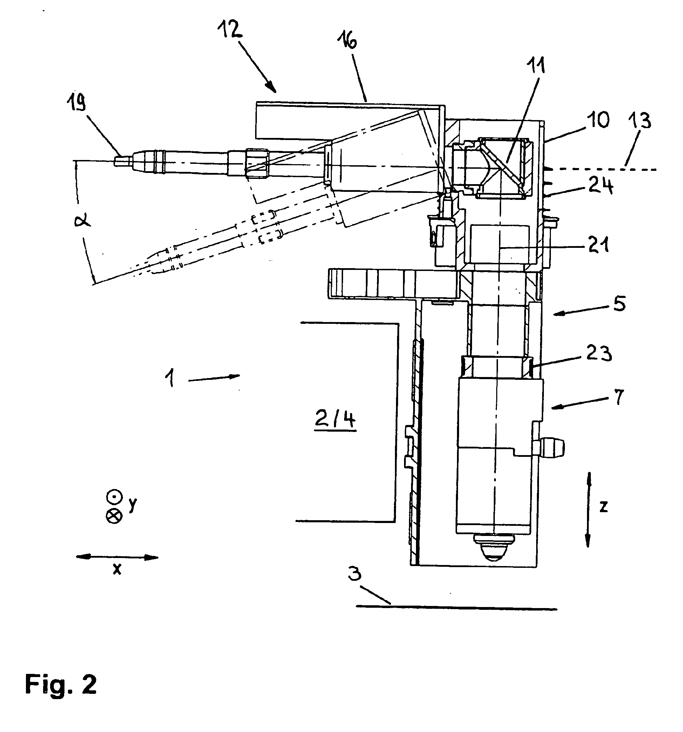

Eine in den Abbildungen teilweise dargestellte maschinelle Vorrichtung zum Bearbeiten von Blechen ist als Laserschneidmaschine 1 ausgeführt. Bei der Laserschneidmaschine 1 handelt es sich um eine Flachbettmaschine, die als solche in üblicher Weise eine Bewegungseinheit 2 umfasst, die über eine in den Figuren angedeutete Werkstückauflage 3 verfahrbar ist. Hauptbestandteil der Bewegungseinheit 2 ist eine in den Figuren ebenfalls nur andeutungsweise gezeigte Brücke 4, welche die Werkstückauflage 3 überspannt und relativ zu der stationären Werkstückauflage 3 in Richtung einer horizontalen x-Achse (Figur 2) bewegt werden kann. Die Brücke 4 lagert und führt ihrerseits eine Baugruppe 5. Diese kann entlang der Brücke 4 in Richtung einer horizontalen y-Achse (Figur 2) verfahren. Als Verfahrantrieb für die Baugruppe 5 ist ein herkömmlicher Linearantrieb vorgesehen. Aufgrund der beschriebenen Bewegungsmöglichkeiten kann die Baugruppe 5 an der Werkstückauflage 3 bzw. an einem auf der Werkstückauflage 3 abgelegten Blech jeden beliebigen Punkt in der horizontalen Auflage- bzw. Blechebene anfahren.

Die Baugruppe 5 umfasst einen Schlitten 6, der an der Brücke 4 in Richtung der y-Achse geführt und mittels des vorstehend genannten Linearantriebes verfahrbar ist. Der Schlitten 6 seinerseits lagert einen Bearbeitungskopf in Form eines Laserschneidkopfes 7. Der Laserschneidkopf 7 ist an dem Schlitten 6 in Richtung einer vertikalen z-Achse beweglich bzw. zustellbar. Als Zustellantrieb für den Laserschneidkopf 7 dient ein nicht gezeigter Linearantrieb. Alternativ ist beispielsweise auch ein Zahnriemenantrieb denkbar. An der zu der Werkstückauflage 3 hin weisenden Seite ist der Laserschneidkopf 7 mit einer herkömmlichen Schneiddüse 8 versehen. Im Innern des Laserschneidkopfes 7 ist eine als Fokussierlinse 9 üblicher Bauart ausgeführte Fokussieroptik untergebracht.

Starr mit dem Schlitten 6 verbunden und folglich in Richtung der z-Achse ortsfest ist ein Umlenkgehäuse 10, das eine Umlenkoptik in Form eines Umlenkspiegels 11 aufnimmt.

An das Umlenkgehäuse 10 ist eine Kollimationseinrichtung 12 angeflanscht. Eine Einrichtungsachse 13 der Kollimationseinrichtung 12 verläuft horizontal und folglich senkrecht zu der z-Achse. Wesentliche Komponenten der Kollimationseinrichtung 12 sind eine Kollimationsoptik in Form einer Kollimationslinse 14 sowie ein Stellantrieb 15, der als Spindelantrieb ausgebildet ist und mittels dessen die Kollimationslinse 14 in Richtung der Einrichtungsachse 13 zugestellt werden kann. Sowohl der Stellantrieb 15 als auch die Kollimationslinse 14 sind im Innern eines Kollimationsgehäuses 16 untergebracht.

An der von dem Umlenkgehäuse 10 abliegenden Seite ist das Kollimationsgehäuse 16 mit einer Steckeraufnahme 17 versehen. In die Steckeraufnahme 17 ist ein Kabelstecker 18 eingesteckt, der seinerseits an dem zu der Kollimationseinrichtung 12 hin weisenden Ende eines Laserlichtkabels 19 angebracht ist.

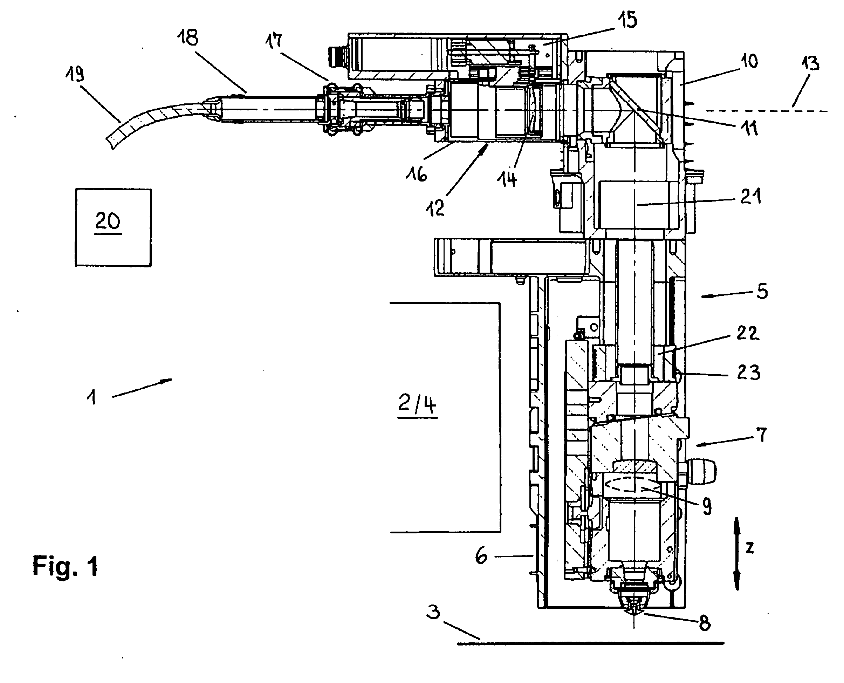

Das Laserlichtkabel 19 stellt eine Verbindung der Baugruppe 5 mit einer Strahlquelle in Form eines in Figur 1 angedeuteten Festkörperlasers 20 her. Dieser erzeugt einen Laserstrahl, der in gewohnter Weise in das Laserlichtkabel 19 eingespeist und durch das Laserlichtkabel 19 der Baugruppe 5 zugeführt wird. Im Bereich der Baugruppe 5 ist der Laserstrahl in den Figuren in Form einer Strahlachse 21 dargestellt.

Die Einrichtungsachse 13 der Kollimationseinrichtung 12 fällt in dem gezeigten Beispielsfall mit der Achse des Laserstrahls 21 zusammen, welcher die Kollimationslinse 14 durchsetzt. Ist an Stelle der Kollimationslinse 14 eine Spiegelanordnung vorgesehen, so wird die Einrichtungsachse 13 durch die Richtung (Hauptrichtung) definiert, in welcher die Verbindung von Eintrittsstelle und Austrittsstelle des Laserstrahls 21 an der Kollimationsoptik verläuft.

Nach dem Austritt aus dem Laserlichtkabel 19 wird der Laserstrahl 21 mittels der Kollimationseinrichtung 12 parallel ausgerichtet. Die Kollimationslinse 14 der Kollimationseinrichtung 12 wird von dem Laserstrahl 21 entlang der Einrichtungsachse 13 durchsetzt. Nach dem Passieren der Kollimationslinse 14 wird der Laserstrahl 21 mittels des Umlenkspiegels 11 um 90° zu der Fokussierlinse 9 hin umgelenkt. Die Umlenkoptik bzw. der Umlenkspiegel 11 kann kipp- bzw. schwenkbar sein, so dass der an ihr bzw. ihm einfallende Laserstrahl 21 in jedem Fall parallel zu der z-Achse ausgerichtet werden kann. Die Fokussierlinse 9 erzeugt aus dem bis dahin als Rohstrahl vorliegenden Laserstrahl 21 den letztlich als Bearbeitungswerkzeug dienenden Laserschneidstrahl. Von der Fokussierlinse 9 aus wird der Laserschneidstrahl auf das jeweils zu bearbeitende, auf der Werkstückauflage 3 abgelegte Blech gerichtet. Alle wesentlichen Funktionen der Laserschneidmaschine 1 sind numerisch gesteuert.

Zwischen dem Umlenkgehäuse 10 und dem Laserschneidkopf 7 verläuft der Laserstrahl 21 in einem Strahlführungsraum 22, dessen Raumwand von einem herkömmlichen Faltenbalg 23 gebildet ist. Der Faltenbalg 23 ist mit einem Längsende an das Umlenkgehäuse 10 und mit dem anderen Längsende an den Laserschneidkopf 7 angebunden. Er kann in Richtung der z-Achse ausgezogen und gestaucht werden.

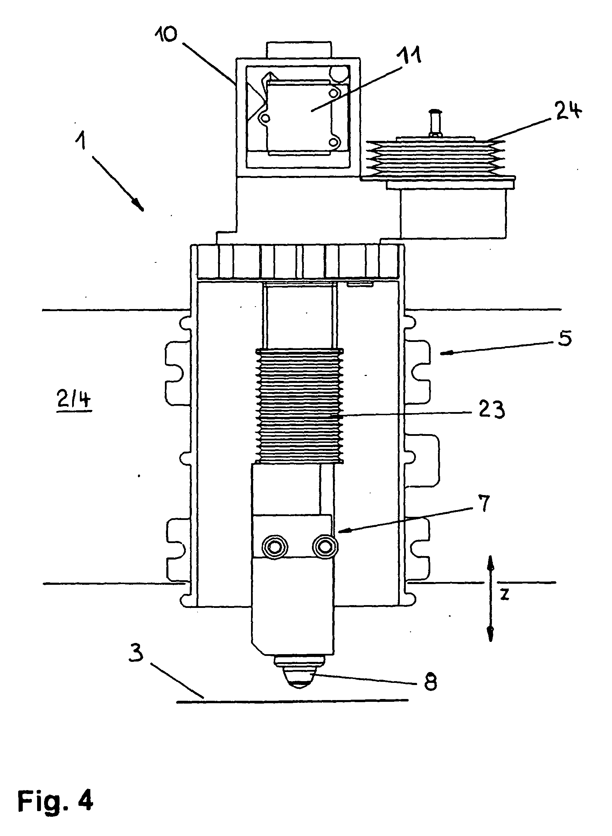

Der Strahlführungsraum 22 ist in dem gezeigten Beispielsfall mit gereinigter Luft gefüllt und weitestmöglich hermetisch gegen die Umgebung der Baugruppe 5 abgedichtet. Über einen nicht im Einzelnen gezeigten Strömungskanal steht der Strahlführungsraum 22 mit einem balgartigen Gasausgleichsvolumen 24 in Strömungsverbindung, das im Einzelnen in Figur 4 zu erkennen ist. In den Figuren 1 bis 3 wird das Gasausgleichsvolumen 24 durch das Umlenkgehäuse 10 weitgehend verdeckt. Im Innern des Strahlführungsraums 22 herrscht ein Druck, welcher den Umgebungsdruck geringfügig übersteigt.

Durch die Gasfüllung des Strahlführungsraumes 22 sowie durch den im Innern des Strahlführungsraumes 22 herrschenden Überdruck wird der Laserstrahl 21 im Innern des Strahlführungsraumes 22 gegen schädliche Umgebungseinflüsse, insbesondere vor leistungsmindernden Gasen geschützt. Feste Verschmutzungen, die ungeachtet der getroffenen Schutzmaßnahmen in das Innere des Strahlführungsraumes 22 gelangen, werden durch einen nicht im Einzelnen gezeigten Schmutzabsorber im Innern des Strahlführungsraumes 22 gebunden und dadurch von dem Laserstrahl 21 ferngehalten.

Im Schneidbetrieb ist der Laserschneidkopf 7 in Richtung der z-Achse in eine Position bewegt, in welcher die Schneiddüse 8 einen in der Größenordnung von einem Millimeter liegenden Abstand von der Oberfläche des zu bearbeitenden Bleches aufweist. Bei einem derartigen Düsenabstand ergeben sich optimale Bearbeitungsergebnisse. Eine Zustellbewegung in Richtung der z-Achse führt der Laserschneidkopf 7 z.B. vor Beginn des Schneidbetriebes aus, um den gewünschten Sollabstand von der Oberfläche des zu bearbeitenden Bleches einzustellen. Nach Beendigung einer Bearbeitung wird der Laserschneidkopf 7 in Richtung der z-Achse angehoben, ehe er zu der nächsten Bearbeitungsstelle verfährt. Im laufenden Schneidbetrieb wird der Laserschneidkopf 7 in Richtung der z-Achse zugestellt, um den anfänglich eingestellten Düsenabstand von der Blechoberfläche etwa bei Blechdickenänderungen beizubehalten. Insbesondere die Zustellbewegungen des Laserbearbeitungskopfes 7 im laufenden Schneidbetrieb sind hochdynamisch. Die erforderliche Dynamik der Zustellbewegungen des Laserschneidkopfes 7 wird durch die bewegungsmäßige Entkopplung des Laserschneidkopfes 7 von den übrigen Komponenten der Baugruppe 5 ermöglicht. So bewegt sich bei den Zustellbewegungen ausschließlich der Laserschneidkopf 7 in Richtung der z-Achse.

Insbesondere die Kollimationseinrichtung 12 mit dem daran angeschlossenen Laserlichtkabel 19 ist in Richtung der z-Achse ortsfest. Infolgedessen ist bei den Zustellbewegungen des Laserschneidkopfes 7 lediglich eine geringe Masse in Richtung der z-Achse zu bewegen. Schwingungen der Kollimationseinrichtung 12, die aufgrund des Vorkragens der Kollimationseinrichtung 12 senkrecht zu der Richtung der z-Achse einen beachtlichen Umfang annähmen und folglich zu einer Beeinträchtigung der Führung des Laserstrahls 21 führen könnten, werden vermieden. Gleichzeitig bewirkt die horizontale Ausrichtung der Kollimationseinrichtung 12 eine kompakte Bauweise der gesamten Baugruppe 5. Das Laserlichtkabel 19 kann flach verlegt werden und daher mit einem Krümmungsradius verlaufen, der größer ist als der für Laserlichtkabel zu fordernde Mindestradius.

Abweichend von den dargestellten Verhältnissen wäre auch eine Ausrichtung der Kollimationseinrichtung 12 unter einem spitzen Winkel α gegen die z-Achse denkbar. Mit einer derartigen Ausrichtung ist die Kollimationseinrichtung 12 in Figur 2 strichpunktiert angedeutet.

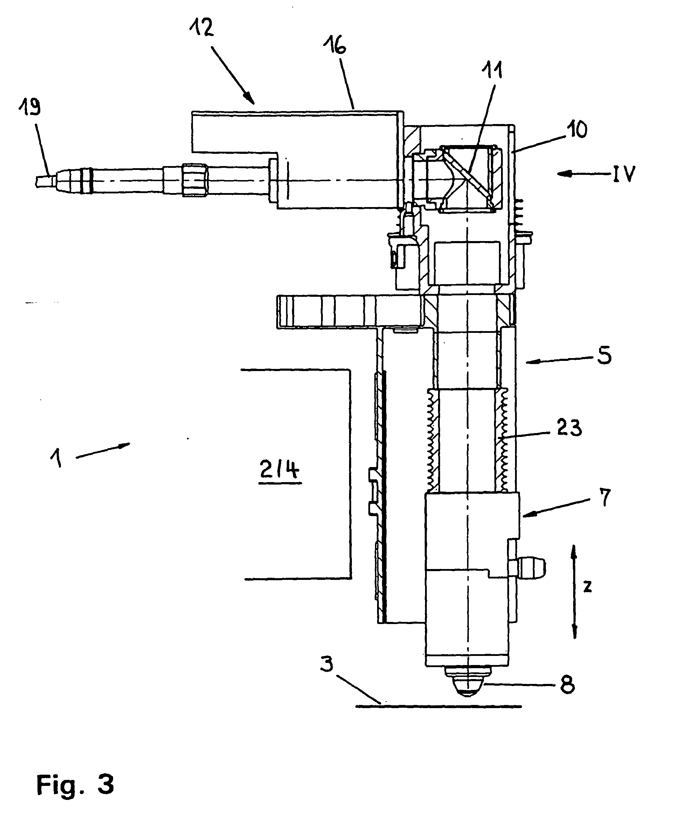

Gemäß den Figuren 1 und 2 befindet sich der Laserschneidkopf 7 in seiner angehobenen Ausgangsstellung. In den Figuren 3 und 4 ist der Laserschneidkopf 7 gegenüber den Figuren 1 und 2 zu der Werkstückauflage 3 hin abgesenkt. Der Faltenbalg 23 ist gegenüber den Verhältnissen gemäß den Figuren 1 und 2 gelängt. Das Gasausgleichsvolumen 24 hat sich verglichen mit den Figuren 1 und 2 verkleinert.

## Patentansprüche

1. Maschinelle Vorrichtung zum Bearbeiten von Werkstücken, beispielsweise von Blechen, mittels eines Laserstrahls (21),
• mit einem Bearbeitungskopf (7), der eine Fokussieroptik (9) aufweist, von welcher aus der Laserstrahl (21) als Bearbeitungsstrahl entlang einer z-Achse auf ein Werkstück richtbar ist,
• mit einem Laserlichtkabel (19), über welches der Laserstrahl (21) der Fokussieroptik zuführbar ist sowie
• mit einer Kollimationseinrichtung (12), die eine zwischen dem zu der Fokussieroptik hin liegenden Ende des Laserlichtkabels (19) und der Fokussieroptik (9) angeordnete Kollimationsoptik (14) umfasst, welche von dem Laserstrahl (21) passierbar ist,
• wobei die Kollimationseinrichtung (12) derart ausgerichtet ist, dass eine parallel zu der Hauptrichtung des Laserstrahls (21) an der Kollimationsoptik (14) verlaufende Einrichtungsachse der Kollimationseinrichtung (12) in Querrichtung der Achse des Bearbeitungsstrahls ("z-Achse") verläuft, wobei eine Umlenkoptik (11) vorgesehen ist, die zwischen der Kollimationsoptik (14) und der Fokussieroptik (9) angeordnet ist und mittels derer der an der Kollimationsoptik (14) austretende Laserstrahl (21) zu der Fokussieroptik (9) hin umlenkbar ist.
• **dadurch gekennzeichnet dass** der Bearbeitungskopf (7) in Richtung der z-Achse relativ zu der Kollimationseinrichtung (12) zustellbar ist.

2. Maschinelle Vorrichtung nach Anspruch 1, **dadurch gekennzeichnet, dass** die Kollimationseinrichtung (12) in Richtung der z-Achse ortsfest angeordnet ist.

3. Maschinelle Vorrichtung nach einem der vorhergehenden Ansprüche, **dadurch gekennzeichnet, dass** die Kollimationseinrichtung (12) derart angeordnet ist, dass die Einrichtungsachse (13) unter einem rechten Winkel gegenüber der z-Achse verläuft und dass zwischen der Kollimationsoptik (14) und der Fokussieroptik (9) eine Umlenkoptik (11) vorgesehen ist, mittels derer der an der Kollimationsoptik (14) austretende Laserstrahl (21) um 90° zu der Fokussieroptik (9) hin umlenkbar ist.

4. Maschinelle Vorrichtung nach einem der vorhergehenden Ansprüche, **dadurch gekennzeichnet, dass** zwischen der Kollimationsoptik (14) und der Fokussieroptik (9) für den Laserstrahl (21) ein Strahlführungsraum (22) vorgesehen ist, der von einer Raumwand begrenzt ist, die ihrerseits an die Kollimationseinrichtung (12) und an den Bearbeitungskopf (7) angebunden und in Richtung der z-Achse verlängerbar und verkürzbar ist.

5. Maschinelle Vorrichtung nach einem der vorhergehenden Ansprüche, **dadurch gekennzeichnet, dass** die Raumwand des Strahlführungsraumes (22) zwischen der Kollimationsoptik (14) und der Fokussieroptik (9) wenigstens teilweise von einem in Richtung der z-Achse ausziehbaren und stauchbaren Faltenbalg (23) gebildet ist.

6. Maschinelle Vorrichtung nach einem der vorhergehenden Ansprüche, **dadurch gekennzeichnet, dass** der Strahlführungsraum (22) zwischen der Kollimationsoptik (14) und der Fokussieroptik (9) mit einem gasförmigen Medium gefüllt und im wesentlichen hermetisch abgedichtet ist und dass der Strahlführungsraum (22) mit einem Gasausgleichsvolumen (24) in Strömungsverbindung steht, mittels dessen Volumenänderungen des Strahlführungsraumes (22) ausgleichbar sind, welche infolge von Zustellbewegungen des Bearbeitungskopfes (7) auftreten.

7. Maschinelle Vorrichtung nach einem der vorhergehenden Ansprüche, **dadurch gekennzeichnet, dass** der Innendruck des Strahlführungsraumes (22) zwischen der Kollimationsoptik (14) und der Fokussieroptik (9) gegenüber dem Druck in der Umgebung des Strahlführungsraumes (22) erhöht ist.

8. Maschinelle Vorrichtung nach einem der vorhergehenden Ansprüche, **dadurch gekennzeichnet, dass** der Strahlführungsraum (22) zwischen der Kollimationsoptik (14) und der Fokussieroptik (9) in seinem Innern einen Schmutzabsorber zum Binden von Verschmutzungen des Strahlführungsraumes (22) aufweist.

## Claims

1. A mechanical device for the machining of workpieces, for example metal sheets, by means of a laser beam (21),
• with a machining head (7) which has a focussing optics (9) for directing the laser beam (21), serving as a machining beam, along a z-axis towards a workpiece,
• with a laser light cable (19), by means of which the laser beam (21) can be supplied to the focussing optics, and
• with a collimator (12) comprising a collimating optics (14) which is arranged between the focussing optics (9) and the end of the laser light cable (19) that lies towards the focussing optics and through which the laser beam (21) can pass,
• wherein the collimator (12) is orientated so that an axis of the collimator (12), extending parallel to the main direction of the laser beam (21) at the collimating optics (14), extends transversely to the axis of the machining beam ("z-axis"), wherein a deflecting optics (11) is provided which is arranged between the collimating optics (14) and the focussing optics (9) and by means of which the laser beam (21) emerging from the collimating optics (14) can be deflected towards the focussing optics (9)
**characterized in that** the machining head (7) is adjustable relative to the collimator (12) in the direction of the z-axis.

2. A mechanical device according to claim 1, **characterised in that** the collimator (12) is fixedly arranged in the direction of the z-axis.

3. A mechanical device according to either one of the preceding claims, **characterised in that** the collimator (12) is arranged so that its axis (13) extends at a right angle to the z-axis and **in that** between the collimating optics (14) and the focussing optics (9) is provided a deflecting optics (11), by means of which the laser beam (21) emerging from the collimating optics (14) is deflectable through 90° towards the focussing optics (9).

4. A mechanical device according to any one of the preceding claims, **characterised in that** a beam guidance chamber (22) for the laser beam (21) is provided between the collimating optics (14) and the focussing optics (9) and is bounded by a chamber wall which for its part is connected to the collimator (12) and to the machining head (7) and can be lengthened and shortened in the direction of the z-axis.

5. A mechanical device according to any one of the preceding claims, **characterised in that** the chamber wall of the beam guidance chamber (22) between the collimating optics (14) and the focussing optics (9) is at least partly formed by a bellows (23) which is extendable and compressible in the direction of the z-axis.

6. A mechanical device according to any one of the preceding claims, **characterised in that** the beam guidance chamber (22) between the collimating optics (14) and the focussing optics (9) is filled with a gaseous medium and is substantially hermetically sealed, and **in that** the beam guidance chamber (22) is fluidically connected to a gas compensation volume (24), by means of which it is possible to compensate for volume changes in the beam guidance chamber (22), which volume changes occur as a result of adjustment movements of the machining head (7).

7. A mechanical device according to any one of the preceding claims, **characterised in that** the internal pressure in the beam guidance chamber (22) between the collimating optics (14) and the focussing optics (9) is increased in relation to the pressure in the environment of the beam guidance chamber (22).

8. A mechanical device according to any one of the preceding claims, **characterised in that** the beam guidance chamber (22) between the collimating optics (14) and the focussing optics (9) has, in its interior, a dirt absorber for absorbing contaminants in the beam guidance chamber (22).

## Revendications

1. Dispositif mécanique pour l'usinage de pièces, par exemple de tôles, au moyen d'un faisceau laser (21),
- avec une tête d'usinage (7), présentant une optique de focalisation (9) à partir de laquelle le faisceau laser (21) peut, en tant que faisceau d'usinage, être dirigé sur une pièce le long d'un axe z,
- avec un câble de lumière laser (19), au moyen duquel le faisceau laser (21) peut être apporté à l'optique de focalisation,
- et avec une unité de collimation (12), comprenant une optique de collimation (14) à travers laquelle peut passer le faisceau laser (21) et qui est disposée entre l'extrémité du câble de lumière laser (19) située vers l'optique de focalisation et l'optique de focalisation (9),
- sachant que l'unité de collimation (12) est orientée de telle sorte qu'un axe d'unité de l'unité de collimation (12), axe s'étendant parallèlement à la direction principale du faisceau laser (21) au niveau de l'optique de collimation (14), s'étend en direction transversale de l'axe du faisceau d'usinage (« axe z »),
- sachant qu'il est prévu une optique de déviation (11), qui est disposée entre l'optique de collimation (14) et l'optique de focalisation (9) et au moyen de laquelle le faisceau laser (21) sortant de l'optique de collimation (14) peut être déviée en direction de l'optique de focalisation (9),
**caractérisé en ce qu'**on peut faire positionner la tête d'usinage (7) dans la direction de l'axe z par rapport à l'unité de collimation (12).

2. Dispositif mécanique selon la revendication 1, **caractérisé en ce que** l'unité de collimation (12) est disposée à poste fixe dans la direction de l'axe z.

3. Dispositif mécanique selon l'une des revendications précédentes, **caractérisé en ce que** l'unité de collimation (12) est disposée de telle sorte que l'axe d'unité (13) s'étend sous un angle droit par rapport à l'axe z, et **en ce qu'**il est prévu entre l'optique de collimation (14) et l'optique de focalisation (9) une optique de déviation (11) au moyen de laquelle le faisceau laser (21) sortant de l'optique de collimation (14) peut être dévié à 90° en direction de l'optique de focalisation (9).

4. Dispositif mécanique selon l'une des revendications précédentes, **caractérisé en ce qu'**il est prévu entre l'optique de collimation (14) et l'optique de focalisation (9) une chambre de guidage de faisceau (22) pour le faisceau laser (21), qui est délimitée par une paroi de chambre qui est elle-même reliée à l'unité de collimation (12) et à la tête d'usinage (7) et qui peut être allongée ou raccourcie dans la direction de l'axe z.

5. Dispositif mécanique selon l'une des revendications précédentes, **caractérisé en ce que** la paroi de chambre de la chambre de guidage de faisceau (22) entre l'optique de collimation (14) et l'optique de focalisation (9) est formée au moins en partie par un soufflet (23) qui peut être déployé et comprimé dans la direction de l'axe z.

6. Dispositif mécanique selon l'une des revendications précédentes, **caractérisé en ce que** la chambre de guidage de faisceau (22) entre l'optique de collimation (14) et l'optique de focalisation (9) est remplie d'un fluide gazeux et est étanchée de manière sensiblement hermétique, et **en ce que** la chambre de guidage de faisceau (22) est en liaison fluidique avec un volume de compensation de gaz (24) qui permet de compenser des modifications de volume de la chambre de guidage de faisceau (22) qui surviennent en raison de mouvements de positionnement de la tête d'usinage (7).

7. Dispositif mécanique selon l'une des revendications précédentes, **caractérisé en ce que** la pression intérieure de la chambre de guidage de faisceau (22) entre l'optique de collimation (14) et l'optique de focalisation (9) est augmentée par rapport à la pression dans l'environnement de la chambre de guidage de faisceau (22).

8. Dispositif mécanique selon l'une des revendications précédentes, **caractérisé en ce que** la chambre de guidage de faisceau (22) entre l'optique de collimation (14) et l'optique de focalisation (9) présente à l'intérieur un absorbeur d'impuretés pour retenir des impuretés de la chambre de guidage de faisceau (22).
